# EUROPÄISCHE PATENTSCHRIFT

(11) **EP 2 688 048 B1**
(45) Veröffentlichungstag und Bekanntmachung des Hinweises auf die Patenterteilung: **09.08.2017**
(21) Anmeldenummer: 13171640.9
(22) Anmeldetag: 12.06.2013
(51) Int. Cl.: G07C 9/00, H01M 2/10

(54) **Flacher Kraftfahrzeugschlüssel**
Flat motor vehicle key
Clé de véhicule plate

(30) Priorität: 20.07.2012 DE 102012106622
(43) Veröffentlichungstag der Anmeldung: 22.01.2014
(60) Teilanmeldung: 17170548.6
(73) Patentinhaber: Huf Hülsbeck & Fürst GmbH & Co. KG, 42551 Velbert (DE)
(72) Erfinder: Sersch, Jürgen, 42659 Solingen (DE)
(74) Vertreter: Zenz Patentanwälte Partnerschaft mbB

(56) Entgegenhaltungen:
- WO-A1-96/10899
- DE-A1-102006 018 900
- DE-A1-102006 019 690
- US-A1- 2009 017 778
- US-A1- 2013 039 024

## Beschreibung

Die vorliegende Erfindung betrifft einen Kraftfahrzeugschlüssel, und insbesondere einen flach bauenden Kraftfahrzeugschlüssel.

Moderne Kraftfahrzeugschlüssel umfassen üblicherweise eine Leiterplatte, auf welcher zumindest eine elektronische Baugruppe, die regelmäßig eine Sender- und Empfängereinheit aufweist, montiert ist, mittels welcher ein Kraftfahrzeug entriegelt und verriegelt werden kann. So offenbart beispielsweise die DE 10 2006 019 690 eine als tragbarer Schlüssel ausgebildete drahtlose Kommunikationseinrichtung, die eine Platine und auf der Platine ausgebrachte Schaltungskomponenten umfasst. Ferner umfasst die Platine einen Anschluss, über welchen die Schaltungskomponenten einer externen Vorrichtung ein Signal übermitteln könne. Zum Schutz gegen Witterungseinflüsse ist die Platine mit einem Gehäuse versehen, welches eine Durchgangsöffnung für den Anschluss umfasst.

Die Schrift WO 96/10899 offenbart eine Speicherkartenanordnung, die eine Leiterplatte mit einer Ausnehmung umfasst. Ein Kontaktelement mit einem federnden Kontaktabschnitt ist an der Leiterplatte befestigt. Das Kontaktelement ist derart an der Leiterplatte befestigt, dass sich der federnde Abschnitt oberhalb einer von der Oberfläche der Leiterplatte definierten Ebene über der Ausnehmung erstreckt, wenn keine Batterie in der Speicherkartenanordnung eingeschoben ist.

Neben den oben genannten grundlegenden Funktionalitäten der elektronischen Baugruppe werden dieser in jüngster Zeit zunehmend weitere Funktionalitäten zugeordnet, so dass es notwendig ist, die Energieversorgung der elektronischen Baugruppe entsprechend anzupassen. Zur Energieversorgung der elektronischen Baugruppe ist üblicherweise eine austauschbare Batterie in dem Schlüssel angeordnet und ist über Kontaktelemente mit der Leiterplatte und damit der elektronischen Baugruppe gekoppelt. Der steigende Energiebedarf der elektronischen Baugruppe bedingt größere Batterien, womit ein Anstieg der Bauhöhe der Batterie einhergeht. Die Batterien sind regelmäßig auf einem Federelement gelagert, welches die Batterie gegen einen Anschlag innerhalb des Kraftfahrzeugschlüssels drückt. Durch den Verbund Feder/Batterie/Anschlag ist eine Mindesthöhe des Kraftfahrzeugschlüssels vorgegeben. Eine übermäßige Bauhöhe des Kraftfahrzeugschlüssels vermindert den Benutzungskomfort und die Möglichkeiten der Aufbewahrung des Kraftfahrzeugschlüssels.

Es ist daher Aufgabe der vorliegenden Erfindung, einen Kraftfahrzeugschlüssel mit einer geringen Bauhöhe und einem gesteigerten Benutzungskomfort bereitzustellen.

Diese Aufgabe wird erfindungsgemäß gelöst durch einen Kraftfahrzeugschlüssel mit einer Leiterplatte, welche eine Ausnehmung aufweist. Bei dieser Ausnehmung kann es sich um eine Vertiefung in der Leiterplatte handeln, die Ausnehmung kann aber auch die Leiterplatte vollständig durchdringen, wobei dann im Bereich der Ausnehmung die Leiterplatte vollständig entfernt ist. Die Ausnehmung kann an einer beliebigen Stelle der Leiterplatte angeordnet sein, es kann sich also um eine Durchgangsöffnung oder einen Einschnitt bei der Stirn oder der Längsseite oder bei einer der Ecken handeln.

Der erfindungsgemäße Kraftfahrzeugschlüssel umfasst ferner eine Halterung für eine Batterie, wobei sich die Halterung zumindest teilweise über der Ausnehmung erstreckt. Bei dieser Halterung kann es sich zum Beispiel um das Gehäuse selber handeln, die Halterung kann aber auch ein gesondertes Bauteil sein, welches an beispielsweise der Leiterplatte oder dem Gehäuse befestigt ist, wobei die Halterung in einem solchen Falle auch einstückig mit den vorgenannten Bauteilen des Kraftfahrzeugschlüssels ausgeführt sein kann. Allgemein kann die Halterung von einem beliebigen Teil des Kraftfahrzeugschlüssels bereitgestellt werden, solange gewährleistet ist, dass sich die Halterung zumindest teilweise über der Ausnehmung erstreckt. Der Kraftfahrzeugschlüssel umfasst ferner Kontaktelemente, die mit der Leiterplatte elektrisch gekoppelt sind, wobei zumindest ein Kontaktelement einen federnden Kontaktabschnitt aufweist, über welchen eine Batterie in der Halterung fixierbar ist. Das Kontaktelement mit dem federnden Kontaktabschnitt ist derart an der Leiterplatte befestigt, dass sich zumindest ein Bereich des federnden Kontaktabschnittes oberhalb einer von der der Halterung zugewandten Oberfläche der Leiterplatte definierten Ebene über der Ausnehmung erstreckt. Der verbleibende Bereich des federnden Kontaktabschnittes kann bei nicht eingelegter Batterie in der Ausnehmung oder über dieser angeordnet sein, je nach Ausführung des Kontaktelementes bzw. des federnden Kontaktabschnittes des Kontaktelementes. Wenn eine Batterie in der Halterung angeordnet ist, ist der sich oberhalb der Ebene erstreckende Bereich des federnden Kontaktabschnittes in der Ausnehmung aufgenommen und über diesen Bereich fixiert der federnde Kontaktabschnitt die Batterie in der Halterung. Die Ausführung des weiteren Kontaktelements ist von der genauen Gestaltung des Kraftfahrzeugschlüssels abhängig; das weitere Kontaktelement kann beispielweise in der Halterung angeordnet sein.

Bei eingelegter Batterie ist der federnde Kontaktabschnitt des Kontaktelementes vollständig in der Ausnehmung aufgenommen, so dass die Batterie, in Abhängigkeit von der genauen Ausgestaltung des Kraftfahrzeugschlüssels, beispielsweise direkt auf der Leiterplatte aufliegt und trotzdem über die Federkraft des federnden Kontaktabschnitts eine Fixierung und Kontaktierung gewährleistet ist. Die Bauhöhe des Kraftfahrzeugschlüssels ist somit vermindert, ohne dass die Kontaktierung oder Lagerung der Batterie in dem Kraftfahrzeugschlüssel nachteilig beeinflusst ist.

Die genaue Ausgestaltung des federnden Kontaktschnittes ist von dem jeweiligen Anwendungsbereich, der zu verbauenden Batterie sowie der Befestigung an der Leiterplatte abhängig. Es ist jedoch bevorzugt, dass in dem Kontaktbereich federnder Kontaktabschnitt/Batterie der federnde Kontaktabschnitt ballig ausgebildet ist. Die Federkraft des federnden Kontaktabschnittes wirkt somit nur punktuell, was einen optimalen Kontakt zu der Batterie gewährleistet und ferner die Oberfläche der Batterie, über welche sich der ballige Abschnitt bei der Einlegung bzw. Einschiebung der Batterie in die Halterung bewegt, schont.

Bei einer bevorzugten Ausführungsform des erfindungsgemäßen Kraftfahrzeugschlüssels umfasst der federnde Kontaktabschnitt des Kontaktelementes eine Mehrzahl von Federarmen, wobei der Kontaktbereich eines jeden Federarmes ballig ausgebildet sein kann. In Abhängigkeit von der Ausgestaltung der Batterie sowie der Ausnehmung in der Leiterplatte ist bei einem derart ausgestalteten federnden Kontaktabschnitt die Lage der Batterie in der Halterung gegen ein Verkippen geschützt.

Die Befestigung des Kontaktelementes mit dem federnden Kontaktabschnitt an der Leiterplatte ist, was die Befestigung als solche angeht, beliebig. So kann beispielsweise ein Befestigungsbereich des Kontaktelementes an der Leiterplatte festgelötet sein, wobei natürlich stets darauf zu achten ist, dass sich ein Bereich des federnden Kontaktabschnittes oberhalb der von der Oberfläche der Leiterplatte definierten Ebene erstreckt.

In Abhängigkeit von der genauen Ausgestaltung des Kraftfahrzeugschlüssels kann es von Vorteil sein, dass die Leiterplatte eine Aussparung aufweist, in welcher das Kontaktelement über dessen Befestigungsabschnitt befestigt ist, wobei diese Aussparung derart ausgebildet ist, dass der Befestigungsbereich des Kontaktelementes die von der Oberfläche der Leiterplatte gebildeten Ebene nicht überschreitet. Durch diese Maßnahme können in dem Befestigungsbereich auch flache Bauelemente auf der Leiterplatte direkt befestigt werden und den Befestigungsbereich überspannen.

Wie bereits angedeutet, kann bei speziellen Ausführungsformen des Kraftfahrzeugschlüssels die Batterie direkt auf der Leiterplatte aufliegen. Bei einer bevorzugten Ausführungsform des erfindungsgemäßen Batterieschlüssel ist es daher vorgesehen, dass die Leiterplatte in dem Bereich um die Ausnehmung eine Schutzbeschichtung umfasst, welche die Leiterplatte gegen Beschädigungen durch die Batterie, sei es bei Einlegung oder bei den tagtäglichen geringfügigen Bewegungen in der Halterung, schützt.

Die Erfindung wird nachfolgend anhand mehrerer bevorzugter Ausführungsformen erläutert, welche in der beiliegenden Zeichnung dargestellt sind, wobei
Figuren 1A-1D eine erste Ausführungsform des erfindungsgemäßen Kraftfahrzeugschlüssels zeigen,
Figuren 2A und 2B eine weitere Ausführungsform des erfindungsgemäßen Kraftfahrzeugschlüssels zeigen,
Figuren 2C, 2D und 3 jeweils eine weitere Ausführungsform des erfindungsgemäßen Kraftfahrzeugschlüssels zeigen,
Figuren 4A und 4B zwei Ausführungsformen des Kontaktelementes mit federndem Kontaktabschnitt zeigen, und
Figuren 5A und 5B verschiedene Arten der Ausnehmung und der daraus resultierenden Befestigung eines beispielhaften Kontaktelementes zeigen.

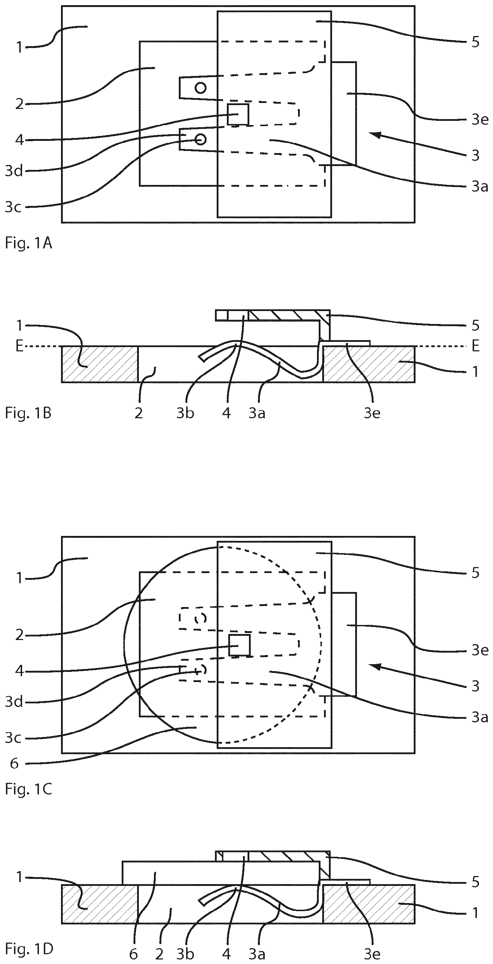

In den Figuren 1A-1D ist eine Draufsicht (Figur 1A und 1C) sowie eine Schnittansicht (Figuren 1B, 1D) einer ersten Ausführungsform des erfindungsgemäßen Kraftfahrzeugschlüssels gezeigt, wobei in den Figuren 1C und 1D eine Batterie 6 in die dafür vorgesehene Halterung 5 eingelegt ist. Bei der nachfolgenden Figurenbeschreibung gilt generell, dass lediglich die für die Erfindung wesentlichen Bauteile des Kraftfahrzeugschlüssels dargestellt sind (beispielsweise ist das Gehäuse stets fortgelassen; bei den gezeigten Ausführungsformen ist die Halterung nicht durch das Gehäuse, sondern durch ein spezielles Bauteil bereitgestellt). Die in den Figuren 1A-1D gezeigte Ausführungsform umfasst eine Leiterplatte 1 mit einer Ausnehmung 2, die mittig in der Leiterplatte 1 angeordnet ist und diese, wie man es den Figuren 1B und 1D entnehmen kann, vollständig durchdringt. Auf der Leiterplatte 1 ist eine Halterung 5 angeordnet, die zumindest einen Abschnitt der Ausnehmung 2 überspannt. Bei dem hier gezeigten Ausführungsbeispiel ist die Halterung 5 für eine Batterie an der Leiterplatte 1 befestigt; bei anderen Ausführungsbeispielen kann, wie bereits angedeutet, die Halterung von beispielsweise dem Gehäuse oder einem an dem Gehäuse befestigten Bauteil bereitgestellt werden.

An der Leiterplatte 1 ist ein erstes Kontaktelement 3 mit einem federnden Kontaktabschnitt 3a befestigt, wobei der federnde Kontaktabschnitt 3a zwei Federarme 3d umfasst, bei deren Endbereich eine ballige Ausbildung 3c ausgeformt ist. Wie der Figur 1B zu entnehmen ist, umfasst der federnde Kontaktabschnitt 3a einen Bereich 3b, der sich oberhalb einer von der Oberfläche der Leiterplatte 1 definierten Ebene E erstreckt. Bei dem Kontaktelement 3 gemäß der ersten Ausführungsform ist in der Schnittansicht 1B zu erkennen, dass der federnde Kontaktabschnitt 3a des Kontaktelementes 3 wellenförmig ausgebildet ist und zu einem großen Teil bei nicht eingelegter Batterie 6 in der Ausnehmung 2 angeordnet ist. Der federnde Kontaktabschnitt 3a geht über in den Befestigungsabschnitt 3e, über welchen das Kontaktelement 3 auf der Leiterplatte 1 befestigt ist. Bei der gezeigten Ausführungsform ist in der Halterung 5 ein weiteres Kontaktelement 4 angeordnet; die Anordnung des Kontaktelementes 4 innerhalb des Kraftfahrzeugschlüssels ist für die vorliegende Erfindung nicht wesentlich, es ist lediglich sicherzustellen, dass bei eingeschobener Batterie eine sichere Kontaktierung auch über das zweite Kontaktelement 4 stattfindet.

Die Figuren 1C und 1D zeigen die gleiche Ausführungsform bei eingelegter bzw. eingeschobener Batterie 6. Aufgrund der Ausgestaltung der Halterung wird die Batterie "von links" in die Halterung eingeschoben. Bedingt durch die Tatsache, dass sich ein Bereich 3b des federnden Kontaktabschnittes 3a über die Ebene E erstreckt, wird der federnde Kontaktabschnitt 3a über den Bereich 3b bei Einschieben der Batterie weiter in die Ausnehmung 2 gedrückt, so dass bei eingeschobener Batterie 6 der federnde Kontaktabschnitt 3a vollständig von der Ausnehmung 2 aufgenommen ist und gleichzeitig durch die Federkraft des federnden Kontaktabschnittes 3a die Batterie 6 in der Halterung 5 fixiert ist. Aufgrund der erfindungsgemäßen Ausgestaltung des Kraftfahrzeugschlüssels ist der für die Fixierung der Batterie 6 in der Halterung 5 wichtige federnde Kontaktabschnitt 3a des Kontaktelementes 3 in der Ausnehmung 2 vollständig aufgenommen, so dass das Kontaktelement die Bauhöhe des Kraftfahrzeugschlüssels nicht nachteilig beeinflusst, gleichzeitig aber eine sichere Fixierung der Batterie 6 gewährleistet ist.

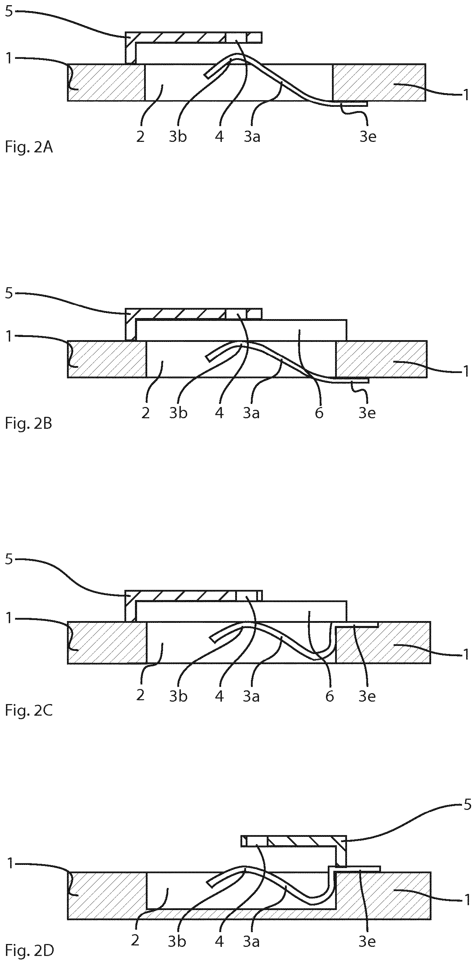

Die Figuren 2A und 2B zeigen eine weitere Ausführungsform des erfindungsgemäßen Kraftfahrzeugschlüssels, wobei bei dieser Ausführungsform das Kontaktelement 3 anders ausgebildet ist. Das bei dieser Ausführungsform verwendete Kontaktelement 3 ist über seinen Befestigungsbereich 3e an der Unterseite der Leiterplatte 1 befestigt, und der federnde Kontaktabschnitt 3a erstreckt sich durch die Ausnehmung 2, und ein Bereich 3b des federnden Kontaktabschnittes 3a erstreckt sich über die von der Oberfläche der Leiterplatte 1 definierte Ebene E. Bei dem gezeigten Ausführungsbeispiel ist ferner die Halterung 5 insofern unterschiedlich, als sie "auf der anderen Seite" der Ausnehmung 2 angeordnet ist. An der Funktionsweise ändert dies nichts; bei Einschub, (der wiederum durch die Gestalt der Halterung bedingt ist) wird der federnde Kontaktabschnitt 3a über den Bereich 3b weiter in die Ausnehmung 2 gedrückt und ist von dieser bei eingelegter Batterie voll umfänglich aufgenommen.

In Abhängigkeit von der "Einschubrichtung" bzw. Montagerichtung der Batterie ist es bevorzugt, dass der federnde Kontaktabschnitt in dem Bereich 3b rundlich ausgebildet ist, so dass ein Einschub von beiden Seiten möglich ist.

Figur 2C zeigt eine weitere Ausführungsform, die sich, abgesehen von der Positionierung der Halterung 5, von der in den Figuren 1A-1D gezeigten Ausführungsform dahingehend unterscheidet, dass die Leiterplatte 1 eine Aussparung 7 aufweist, in welcher der Befestigungsbereich 3e des Kontaktelements 3 angeordnet ist, wobei die Aussparung 7 derart dimensioniert ist, dass der Befestigungsbereich 3e des Kontaktelementes 3 die durch die Oberfläche der Leiterplatte 1 definierte Ebene E nicht übersteigt, so dass sichergestellt ist, dass in diesen Bereich auch flache Bauelemente auf der Leiterplatte verbaut werden können.

Bei der in der Figur 2D gezeigten Ausführungsform durchdringt die Ausnehmung 2 die Leiterplatte nicht vollständig, sondern bildet eine Art Wanne in der Leiterplatte 1. Eine derartige Ausgestaltung der Ausnehmung 2 hat jedoch keine weiteren Auswirkungen auf den erfindungsgemäßen Kraftfahrzeugschlüssel bzw. dessen Funktion; bei Einschieben einer Batterie wird der federnde Kontaktabschnitt 3a des Kontaktelementes 3 über den Bereich 3b in die Ausnehmung gedrückt und ist von dieser bei eingelegter Batterie 6 vollständig aufgenommen.

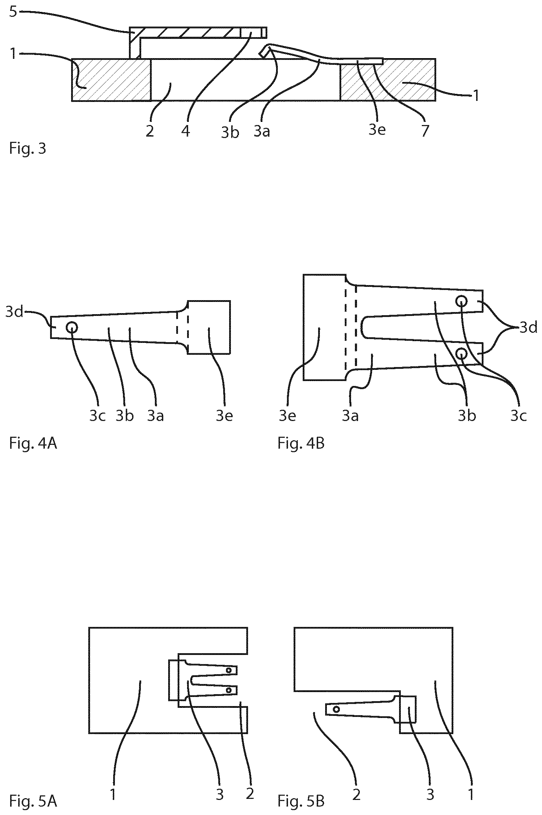

Figur 3C zeigt eine Ausführungsform, bei welcher das Kontaktelement 3, im Vergleich zu den vorherigen Ausführungsformen, unterschiedlich ausgebildet ist. Das Kontaktelement 3 ist wiederum über den Befestigungsbereich 3e in einer Aussparung 7 der Leiterplatte befestigt. Der federnde Kontaktabschnitt 3a des Kontaktelementes 3 erstreckt sich jedoch nicht, oder nur in geringem Maße, (bei nicht eingelegter Batterie) in der Ausnehmung 2, sondern erstreckt sich im Wesentlichen über der durch die Oberfläche der Leiterplatte 1 definierten Ebene. Bei Einlegen einer Batterie 6 wird aber auch bei dieser Ausführungsform der federnde Kontaktabschnitt 3a in die Ausnehmung 2 gedrückt und ist bei eingelegter Batterie 6 von dieser vollständig aufgenommen.

Die Figuren 4A und 4B zeigen verschiedene Ausführungsformen des bei dem erfindungsgemäßen Kraftfahrzeugschlüssel zur Anwendung kommenden Kontaktelementes 3 mit federndem Kontaktabschnitt 3a. Bei der in Figur 4A gezeigten Ausführungsform umfasst der federnde Kontaktabschnitt 3a des Kontaktelementes 3 einen Federarm 3d, an dessen Ende eine ballige Ausbuchtung 3c angeordnet ist. Bei der in Figur 4B gezeigten Ausführungsform (die bei den Ausführungsformen der Figuren 1A-1D, 2A und 2B, 2C und 2D bereits dargestellt wurde), umfasst der federnde Kontaktabschnitt 3a zwei Federarme 3d mit jeweils einer balligen Ausbuchtung 3c bei dem Endbereich des jeweiligen Federarms 3d.

Die Figuren 5A und 5B zeigen unterschiedliche Konfigurationen bzw. Anordnungen der Ausnehmung 2 in bzw. bei der Leiterplatte 1. Bei der in Figur 5A gezeigten Ausführungsform ist die Ausnehmung 2 als Einschnitt bei einer Stirnseite der Leiterplatte ausgebildet, was in einer U-förmigen Gestalt der Leiterplatte resultiert. Bei der in Figur 5B gezeigten Ausführungsform ist der untere linke Eckbereich der Leiterplatte weggeschnitten.

## Patentansprüche

1. Kraftfahrzeugschlüssel mit
einer Leiterplatte (1) mit einer Ausnehmung (2),
einer Halterung (5) für eine Batterie (6), wobei sich die Halterung (5) zumindest teilweise über der Ausnehmung (2) erstreckt, und
Kontaktelementen (3, 4), die mit der Leiterplatte (1) elektrisch gekoppelt sind, wobei ein Kontaktelement (3) einen federnden Kontaktabschnitt (3a) aufweist, über welchen eine Batterie (6) in der Halterung (5) fixierbar ist,
**dadurch gekennzeichnet, dass** das Kontaktelement mit dem federnden Kontaktabschnitt derart an der Leiterplatte (1) befestigt ist, dass sich ein Bereich (3b) des federnden Kontaktabschnitts (3a) oberhalb einer von der der Halterung (5) zugewandten Oberfläche der Leiterplatte (1) definierten Ebene über der Ausnehmung (2) erstreckt und zumindest dieser Bereich (3b) in der Ausnehmung (2) aufgenommen ist, wenn eine Batterie (6) in der Halterung (5) angeordnet ist und von dem federnden Kontaktabschnitt (3a) in dieser fixiert ist.

2. Kraftfahrzeugschlüssel nach Anspruch 1, **dadurch gekennzeichnet, dass** der federnde Kontaktabschnitt (3a) eine Mehrzahl von Federarmen (3d) umfasst.

3. Kraftfahrzeugschlüssel nach Anspruch 1 oder 2, **dadurch gekennzeichnet, dass** der federnde Kontaktabschnitt (3a) in einem Kontaktbereich (3c) ballig ausgebildet ist.

4. Kraftfahrzeugschlüssel nach einem der Ansprüche 1 - 3, **dadurch gekennzeichnet, dass** der Leiterplatte (1) eine Aussparung (7) aufweist, in welcher das Kontaktelement (3) befestigt ist, wobei die Aussparung (7) derart ausgebildet ist, dass der Befestigungsbereich (3e) des Kontaktelementes (3) die von der Oberfläche der Leiterplatte (1) gebildet Ebene nicht überschreitet.

5. Kraftfahrzeugschlüssel nach einem der Ansprüche 1 - 4, **dadurch gekennzeichnet, dass** die Leiterplatte (1) in dem Bereich um die Ausnehmung eine Schutzbeschichtung umfasst.

## Claims

1. A motor vehicle key, with
a printed circuit board (1) with a recess (2),
a mounting (5) for a battery (6), wherein the mounting (5) extends at least partially over the recess (2), and
contact elements (3, 4), which are electrically coupled with the printed circuit board (1), wherein a contact element (3) has a sprung contact section (3a), by means of which a battery (6) can be fixed in the mounting (5),
**characterised in that** the contact element with the sprung contact section is attached to the printed circuit board (1) such that a region (3b) of the sprung contact section (3a) extends over the recess above a plane defined by the surface of the printed circuit board (1) facing the mounting (5), and at least this region (3b) is accommodated in the recess (2) if a battery (6) is arranged in the mounting (5) and is fixed therein by the sprung contact section (3a).

2. The motor vehicle key in accordance with claim 1, **characterised in that** the sprung contact section (3a) comprises a multiplicity of spring arms (3d).

3. The motor vehicle key in accordance with claim 1 or 2, **characterised in that** the sprung contact section (3a) is designed to be spherical in a contact region (3c).

4. The motor vehicle key in accordance with one of the claims 1 - 3, **characterised in that** the printed circuit board (1) has a recess (7), in which the contact element (3) is attached, wherein the recess (7) is designed such that the attachment region (3e) of the contact element (3) does not transgress the plane formed by the surface of the printed circuit board (1).

5. The motor vehicle key in accordance with one of the claims 1 - 4, **characterised in that** the printed circuit board (1) comprises a protective coating in the region around the recess.

## Revendications

1. Clé de véhicule avec
une plaquette de circuits imprimés (1) avec une cavité (2),
une fixation (5) pour une batterie (6), la fixation (5) s'étendant au moins en partie sur la cavité (2), et
des éléments de contact (3, 4), qui sont électriquement couplés à la plaquette de circuits imprimés (1), un élément de contact(3) comportant une section de contact faisant ressort (3a) sur laquelle une batterie (6) peut être fixée dans la fixation (5),
**caractérisée en ce que** l'élément de contact avec la section de contact faisant ressort est fixé sur la plaquette de circuits imprimés (1) de telle manière qu'une zone (3b) de la section de contact faisant ressort (3a) au-dessus d'un plan défini par la surface tournée vers la fixation (5) de la plaquette de circuits imprimés (1) s'étend sur la cavité (2) et au moins cette zone (3b) est logée dans la cavité (2), si une batterie (6) est disposée dans la fixation (5) et est fixée dans celle-ci par la section de contact faisant ressort (3a).

2. Clé de véhicule selon la revendication 1, **caractérisée en ce que** la section de contact faisant ressort (3a) comprend une pluralité de bras de ressort (3d).

3. Clé de véhicule selon la revendication 1 ou 2, **caractérisée en ce que** la section de contact faisant ressort (3a) est constituée bombée dans une zone de contact (3c).

4. Clé de véhicule selon l'une quelconque des revendications 1 - 3, **caractérisée en ce que** la plaquette de circuits imprimés (1) comporte un évidement (7) dans lequel l'élément de contact (3) est fixé, l'évidement (7) étant constitué de telle manière que la zone de fixation (3e) de l'élément de contact (3) ne dépasse pas le plan formé par la surface de la plaquette de circuits imprimés (1).

5. Clé de véhicule selon l'une quelconque des revendications 1 - 4, **caractérisée en ce que** la plaquette de circuits imprimés (1) comprend un revêtement de protection dans la zone autour de l'évidement.
